# EUROPÄISCHE PATENTANMELDUNG

(11) **EP 4 418 488 A1**
(43) Veröffentlichungstag der Anmeldung: **21.08.2024**
(21) Anmeldenummer: 23156735.5
(22) Anmeldetag: 15.02.2023
(51) Int. Cl.: H02J 7/00, H01M 10/613, H01M 10/615

(54) **SYSTEM ZUM LADEN, KÜHLEN UND ERWÄRMEN VON AKKUMULATOREN**

(71) Anmelder: Hilti Aktiengesellschaft, 9494 Schaan (LI)
(72) Erfinder: Hauser, Klaus, 86830 Schwabmünchen (DE); Ender, Moses, 86916 Kaufering (DE); Seltmann, Daniel, 86899 Landsberg am Lech (DE); Stanger, Robert, 87600 Kaufbeuren (DE); Hartmann, Markus, 87665 Mauerstetten (DE); Frenzel, Mathias, 86944 Unterdießen (DE); Holubarsch, Markus, 86899 Landsberg am Lech (DE); Britz, Rory, 82319 Starnberg (DE)
(74) Vertreter: Hilti Aktiengesellschaft Corporate Intellectual Property

(57) **Zusammenfassung**

System mit wenigstens einer ersten Aufnahmevorrichtung (2a) zum Aufnehmen wenigstens eines ersten Akkumulators (4a), wobei der wenigstens erste Akkumulator einen Temperatursensor (7) zum Erfassen mindestens eines Temperaturwertes des Akkumulators enthält, wobei die wenigstens erste Aufnahmevorrichtung eine Ladeeinrichtung (13) zum Laden des Akkumulators mit elektrischer Energie, eine Kühlungseinrichtung (14) zum Kühlen des Akkumulators sowie eine Wärmeeinrichtung (15) zum Erwärmen des Akkumulators enthält.

## Beschreibung

Die vorliegende Erfindung betrifft ein System mit wenigstens einer ersten Aufnahmevorrichtung zum Aufnehmen wenigstens eines ersten Akkumulators, wobei der wenigstens erste Akkumulator einen Temperatursensor zum Erfassen mindestens eines Temperaturwertes des Akkumulators enthält.

Akkumulatoren (auch Akku genannt) als Energieversorgung für eine Werkzeugmaschine sind gemäß dem Stand der Technik weitgehend bekannt. Diese Akkumulator enthalten für gewöhnlich eine Anzahl an Energiespeicherzellen (auch Akkuzellen genannt), die zum Aufnehmen, Speichern sowie Abgeben von elektrischer Energie dienen und ausgestaltet sind. Das Aufnehmen von elektrischer Energie in die Energiespeicherzellen kann auch als Laden (bzw. Aufladen) bezeichnet werden. Das Abgeben von elektrischer Energie aus den Energiespeicherzellen kann auch als Entladen bezeichnet werden.

Zum Aufladen bzw. Laden mit elektrischer Energie wird der Akkumulator für gewöhnlich mit einer Ladeeinrichtung (auch Lader oder Charger genannt) verbunden. Die Ladeeinrichtung leitet elektrische Energie gemäß einer vorbestimmten Ladeeinstellung (auch Lademodus genannt) mit festgelegten Parametern für den eigentlichen Ladevorgang an die einzelnen Energiespeicherzellen der Akkumulators.

Um ein nahezu optimales Laden eines Akkumulators mit elektrischer Energie sowie ein nahezu bestmögliches Entladen des Akkumulators (d.h. die erneute Abgabe der in dem Akkumulator gespeicherten Energie an beispielsweise eine Werkzeugmaschine) zu erreichen, sollten die Parameter des Akkumulators zwischen minimalen und maximalen Schwellwerten befinden. Ein Betreiben, d.h. das Laden und auch Entladen, eines Akkumulators außerhalb der Schwellwerte kann dabei zu wesentlich längeren Ladezeiten, einer geringeren Kapazität und/oder einem niedrigeren Entladestromwert führen.

Das Einhalten der Parameter des Akkumulators im Idealbereich bzw. zwischen den Schwellwerten ist insbesondere bei dem Außeneinsatz der Akkumulatoren und bei extremen Wetterverhältnissen nur schwer zu ermöglichen.

Aufgabe der vorliegenden Erfindung ist das vorstehend beschriebene Problem zu lösen.

Die Aufgabe wird ebenfalls gelöst durch den Gegenstand des Anspruchs 1. Weitere vorteilhafte Ausführungen der Erfindung sind in den entsprechenden Unteransprüchen beschrieben.

Die Aufgabe wird insbesondere gelöst durch ein System mit wenigstens einer ersten Aufnahmevorrichtung zum Aufnehmen wenigstens eines ersten Akkumulators, wobei der wenigstens erste Akkumulator einen Temperatursensor zum Erfassen mindestens eines Temperaturwertes des Akkumulators enthält.

Erfindungsgemäß ist vorgesehen, dass die wenigstens erste Aufnahmevorrichtung eine Ladeeinrichtung zum Laden des Akkumulators mit elektrischer Energie, eine Kühlungseinrichtung zum Kühlen des Akkumulators sowie eine Wärmeeinrichtung zum Erwärmen des Akkumulators enthält.

Zum Speichern von elektrischer Energie enthält der Akkumulator wenigstens eine Energiespeicherzelle. Es ist zu beachten, dass der Temperatursensor des Akkumulators insbesondere, aber nicht ausschließlich dazu ausgestaltet ist, die Temperatur der wenigstens einen Energiespeicherzelle zu erfassen. Bei einer Ausführungsform, bei der der Akkumulator eine Vielzahl an Energiespeicherzellen enthält, ist der Temperatursensor so ausgestaltet und positioniert, dass wenigstens die Temperatur der Energiespeicherzelle erfasst, die von einer Außenwand des Akkumulators am weitesten entfernt angeordnet ist.

Gemäß einem weiteren vorteilhaften Ausführungsbeispiel kann es möglich sein, dass eine Diagnoseeinrichtung zum Ermitteln wenigstens eines Parameters des Akkumulators enthalten ist. Bei den Parametern des Akkumulators kann es sich um die elektrische Spannung, die Kapazität, die Temperatur, den elektrischen Widerstand und dergleichen handeln.

Entsprechend einem vorteilhaften Ausführungsbeispiel kann es möglich sein, dass an der wenigstens ersten Aufnahmevorrichtung mindestens eine Anzeigeeinrichtung zum Ausgeben wenigstens eines Freigabesignals oder eines Sperrsignals enthalten ist. Die Anzeigeeinrichtung kann dabei ausgestaltet sein, akustische und/oder visuelle Signale auszugeben. Einem Anwender des Systems kann mit Hilfe der Anzeigeeinrichtung Informationen über den Zustand des Systems und/oder eines Akkumulators gegeben werden.

Gemäß einem weiteren vorteilhaften Ausführungsbeispiel kann es möglich sein, dass die Aufnahmevorrichtung als Kammer ausgestaltet ist, wobei die Kammer mindestens ein Volumen zum Aufnehmen wenigstens eines Akkumulators und wenigstens eine wiederverschließbare Öffnung zum Platzieren des wenigstens einen Akkumulators im Inneren der Kammer aufweist. Mit Hilfe der Kammer bzw. der Isolierenden Wirkung der Kammer kann eine angestrebte Temperatur für einen in der Kammer positionierten Akkumulator leichter erreicht und gehalten werden.

Entsprechend einem vorteilhaften Ausführungsbeispiel kann es möglich sein, dass wenigstens eine zweite Aufnahmevorrichtung zur Aufnehmen wenigstens eines zweiten Akkumulators enthalten ist. Hierdurch können gleichzeitig mehrere Akkumulatoren in dem System positioniert werden.

Gemäß einem weiteren vorteilhaften Ausführungsbeispiel kann es möglich sein, dass eine Annahmeeinrichtung sowie eine erste Transporteinrichtung enthalten ist, wobei die Annahmeeinrichtung zum Empfangen wenigstens eines Akkumulators und die erste Transporteinrichtung zum Transport des wenigstens einen Akkumulators zu einer Aufnahmevorrichtung ausgestaltet ist.

Entsprechend einem vorteilhaften Ausführungsbeispiel kann es möglich sein, dass eine Lagereinrichtung sowie eine zweite Transporteinrichtung enthalten ist, wobei die Lagereinrichtung zum wenigstens zeitweiligen Lagern wenigstens eines Akkumulators und die zweite Transporteinrichtung zum Transport des wenigstens einen Akkumulators von einer Aufnahmevorrichtung zu der Lagereinrichtung ausgestaltet ist.

Weitere Vorteile ergeben sich aus der folgenden Figurenbeschreibung. In der Figur ist ein besonders bevorzugtes Ausführungsbeispiel der vorliegenden Erfindung dargestellt. Die Figuren, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

In der Figur sind gleiche und gleichartige Komponenten mit gleichen Bezugszeichen beziffert.

Es zeigt:
- Figur 1: eine perspektivische Ansicht auf ein System mit einer ersten und zweiten Aufnahmevorrichtung gemäß einem ersten Ausführungsbeispiel;
- Figur 2: eine perspektivische Ansicht auf das System mit der ersten und zweiten Aufnahmevorrichtung gemäß dem ersten Ausführungsbeispiel in einem aktivierten Zustand;
- Figur 3: eine perspektivische Ansicht auf eine Aufnahmevorrichtung gemäß einem ersten Ausführungsbeispiel; und
- Figur 4: perspektivische Ansicht auf ein System mit einer ersten, zweiten und dritten Aufnahmevorrichtung gemäß einem zweiten Ausführungsbeispiel.

### Ausführungsbeispiele:

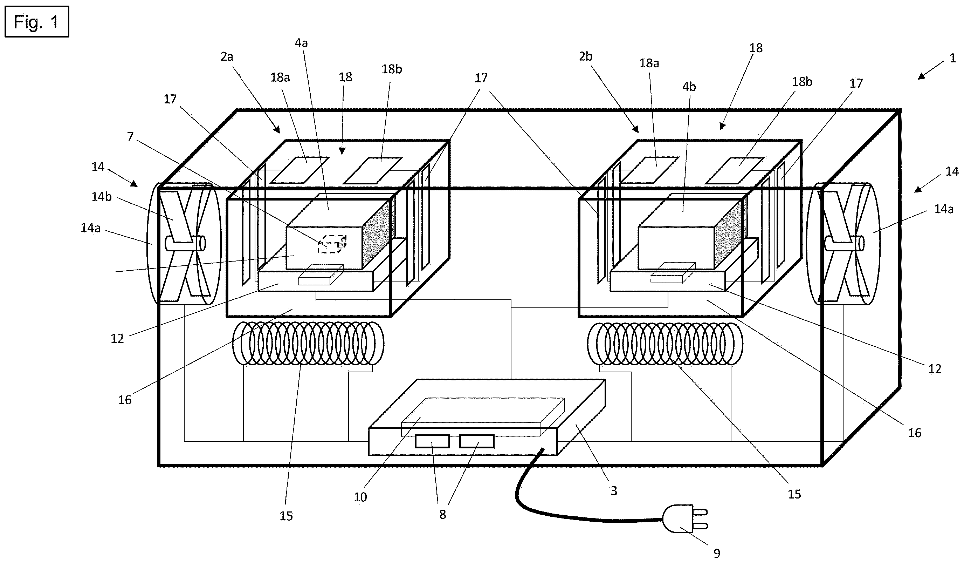

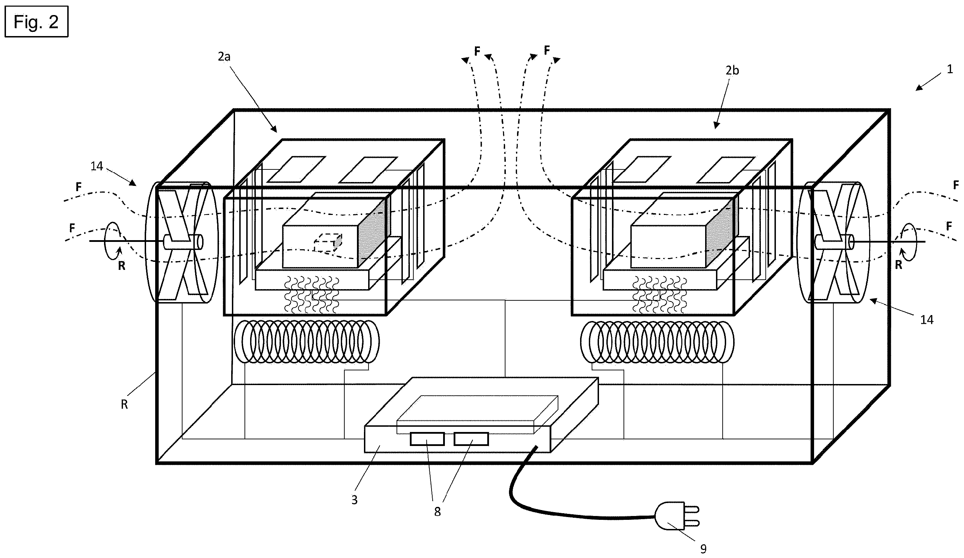

Figur 1 und 2 zeigt ein erfindungsgemäßes System 1 mit einer ersten Aufnahmevorrichtung 2a und zweiten Aufnahmevorrichtung 2b sowie einer Steuereinheit 3 gemäß einem ersten Ausführungsbeispiel.

In der ersten Aufnahmevorrichtung 2a ist ein erster Akkumulator 4a und in der zweiten Aufnahmevorrichtung 2b ist ein zweiter Akkumulator 4b positioniert.

Die beiden Akkumulatoren 4a, 4b sind in dem ersten Ausführungsbeispiel baugleich. Es ist jedoch auch möglich, dass die Akkumulatoren 4a, 4b nicht baugleich bzw. unterschiedlich ausgestaltet sind.

Der Akkumulator 4a, 4b kann mit einer Werkzeugmaschine wiederlösbar verbunden werden, um die Werkzeugmaschine mit elektrischer Energie zu versorgen. Die Werkzeugmaschine ist in den Figuren nicht dargestellt.

Des Weiteren enthält der Akkumulator 4a, 4b im Wesentlichen ein Akku-Gehäuse 5, eine Anzahl an Energiespeicherzellen 5a, eine Akku-Schnittstelle sowie eine Steuerungseinrichtung 6.

Die Energiespeicherzellen 5a können auch als Akku-Zellen bezeichnet werden und sind im Inneren des Akku-Gehäuses 5 angeordnet. Die Akku-Schnittstelle ist in den Figuren nicht gezeigt.

Das Akku-Gehäuse 5 enthält dabei im Wesentlichen ein Deckelelement, vier Seitenwände und ein Bodenelement.

Die Akku-Schnittstelle ist an der Außenseite des Deckelelements angeordnet und dient zum elektrischen bzw. elektronischen sowie mechanischen Verbinden des Akkumulators 4a, 4b mit der Werkzeugmaschine oder der Aufnahmevorrichtung 2a, 2b.

Zum elektrischen bzw. elektronischen Verbinden weist die Akku-Schnittstelle einen Pluskontakt, einen Minuskontakt und einen Kommunikationskontakt auf. Der Plus- und Minuskontakt dient zur Erzeugen eines Stromkreises, wenn der Akkumulator 4a, 4b mit einer Werkzeugmaschine oder der Aufnahmevorrichtung 2a, 2b verbunden ist. Der Kommunikationskontakt dient zum Senden und Empfangen von Daten sowie Informationen in Form von elektrischen Signalen. Alternativ oder zusätzlich kann der Akkumulator 4a, 4b auch eine Funkkommunikation (z.B. Bluetooth) bzw. drahtlose Kommunikation enthalten.

Die Energiespeicherzellen 5a dienen zum Aufnehmen, Speichern und erneuten Abgeben elektrischer Energie. Wie in den Figuren angedeutet, sind die Energiespeicherzellen 5a in zylindrischer Form und auf Basis einer Lithium-Ionen-Technologie ausgestaltet. Jede Energiespeicherzelle 5a enthält an einem Ende eine Kontakteinrichtung, die zur Übertragung elektrischer Energie dient. Die einzelnen Kontakteinrichtung sind über entsprechende Leitungen mit der Steuerungseinrichtung 6 verbunden.

Alternativ können die Energiespeicherzellen 5a auch auf einer anderen geeigneten Technologie basieren.

Die Kontakteinrichtung sind in den Figuren nicht gezeigt.

Die zylindrische Form der Energiespeicherzellen 5a ist ebenfalls beispielhaft, sodass auch jede andere geeignete Form bzw. Geometrie gewählt werden kann. So ist es insbesondere auch möglich, dass die Energiespeicherzellen 5a als Pouchzellen ausgestaltet sind.

Es ist zudem auch möglich, dass der Akkumulator 4a, 4b sowohl zylindrische Energiespeicherzellen 5a als auch Pouch-Zellen enthält. Es ist insbesondere möglich, dass der Akkumulator 4a, 4b eine einzige zylindrische Energiespeicherzelle 5a und eine einzige Pouchzelle enthält.

Die Steuerungseinrichtung 6 regelt und steuert verschiedene Funktionen des Akkumulators 4a, 4b. Des Weiteren enthält die Steuerungseinrichtung 6 einen Temperatursensor 7 zum Erfassen mindestens eines Temperaturwertes des Akkumulators 4a, 4b. Wie in den Figuren angedeutet, ist der Temperatursensor 7 in der Mitte des Akkumulators 4a, 4b, d.h. in der Nähe der Energiespeicherzelle 5a positioniert, die von den Wänden des Akku-Gehäuses 5 am weitest entfernt ist. Für gewöhnlich wird diese Energiespeicherzelle 5a während der Verwendung des Akkumulators 4a, 4b am wärmsten und ist dadurch am ehesten anfällig für wärmebedingte Beschädigungen.

Darüber hinaus ist die Steuerungseinrichtung 6 so mit den Energiespeicherzellen 5a und der Akku-Schnittstelle über entsprechende Leitungen verbunden, dass elektrische Energie von den Energiespeicherzellen 5a über die Steuerungseinrichtung 6 zu der Akku-Schnittstelle gelangen kann.

Zum wiederlösbaren mechanischen Koppeln des Akkumulators 4a, 4b mit der Werkzeugmaschine ist eine Schienenvorrichtung vorgesehen.

Eine (in den Figuren nicht gezeigte) Verriegelungsvorrichtung dient zum wiederlösbaren Verbinden des Akkumulators 4a, 4b mit der Werkzeugmaschine oder der Aufnahmevorrichtung 2a, 2b.

Die Steuereinheit 3 des Systems 1 dient zum Regeln und Steuern der einzelnen Funktionen des Systems 1 und insbesondere der Funktionen der Aufnahmevorrichtung 2a, 2b. Des Weiteren enthält die Steuereinheit 3 ein Ein- und Ausgabeeinrichtung 8, einen Netzanschluss 9 sowie einen Speicher 10.

Wie in den Figuren 1, 2 und 4 angedeutet ist der Netzanschluss 9 in Form eines Stromkabel ausgestaltet, um das System 1 wiederlösbar mit einer Netzstromquelle (z.B. Steckdose) zur Versorgung mit elektrischer Energie zu verbinden. Die Netzstromquelle ist in den Figuren nicht gezeigt.

Die erste und zweite Aufnahmevorrichtung 2a, 2b sind gemäß dem ersten Ausführungsbeispiel im Wesentlichen baugleich ausgestaltet.

Jede Aufnahmevorrichtung 2a, 2b enthält dabei eine Kammer 11, eine Diagnoseeinrichtung 12, eine Ladeeinrichtung 13, eine Kühlungseinrichtung 14 und eine Wärmeeinrichtung 15.

Wie in Figur 1 angedeutet, enthält das System 1 gemäß dem ersten Ausführungsbeispiel einen Rahmen R. In dem Rahmen R sind die beiden Aufnahmevorrichtungen 2a, 2b sowie die Steuereinheit 3 positioniert. Wie ebenfalls in Figur 1 angedeutet ist an einer Seite des Rahmens R die Kühlungseinrichtung 14 für die erste Aufnahmevorrichtung 2a und an einer anderen Seite die Kühlungseinrichtung 14 für die zweite Aufnahmevorrichtung 2b positioniert. Anstelle eines Rahmens R kann auch ein geschlossener oder nahezu geschlossener Kasten vorgesehen sein.

Wie den Figuren entnehmbar weist die Kammer 11 im Wesentlichen einen Boden, einen Deckel, drei Seitenwände und eine Öffnung 16 auf. Die Kammer 11 weist ein Volumen (oder Innenraum) zum Aufnehmen eines Akkumulators 2a, 2b auf.

Die Öffnung 16 ist in Form einer Tür 16a mit einem Scharnier 16b ausgestaltet, sodass die Kammer 11 verschlossen werden kann. Des Weiteren ist die Öffnung 16 mindestens so groß, dass ein Akkumulator 2a, 2b hindurch passt. Entsprechend einem weiteren Ausführungsbeispiel weist die Kammer 11 keine Tür auf, sodass die Kammer 11 zu einer Seite hin stets geöffnet ist.

Darüber hinaus enthalten zwei gegenüberliegende Seitenwände längliche Lüftungsöffnungen 17 auf. Alternativ oder zusätzlich kann auch der Deckel wenigstens eine Lüftungsöffnung 17 enthalten.

Die Lüftungsöffnungen 17 dienen dazu, dass das Kühlluft in das Innere der Kammer 11 und wieder aus der Kammer 11 hinausströmen kann.

Ferner ist, wie in den Figuren angedeutet, an einer Außenseite des Deckels der Kammer 11 eine Anzeigeeinrichtung 18 zum Ausgeben wenigstens eines Freigabesignals oder eines Sperrsignals positioniert. Die Anzeigeeinrichtung 18 ist dabei ausgestaltet, dass akustische und/oder visuelle Signale ausgegeben werden können. Es ist zudem möglich, dass weitere Signale, neben einem Freigabesignal oder Sperrsignal, ausgesendet werden können. In dem vorliegenden Ausführungsbeispiel ist die Anzeigeeinrichtung 18 in Form einer ersten und zweiten LED-Leuchte 18a, 18b ausgestaltet, wobei eine grüne LED-Leuchte 18a das Freigabesignal anzeigt und eine rote LED-Leuchte 18b das Sperrsignal anzeigt.

Die Diagnoseeinrichtung 12 dient zum Ermitteln wenigstens eines Parameters des Akkumulators 4a, 4b und ist mit der Steuereinheit 3 sowie dem Speicher 10 des Systems 1 so verbunden, dass Daten und Informationen in Form von Signalen ausgetauscht werden können.

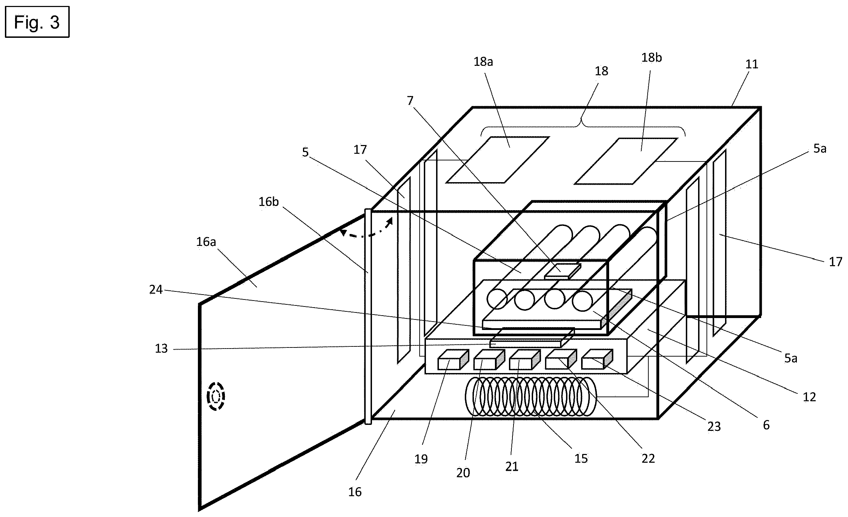

Bei den Parameter handelt es sich um die elektrische Spannung, die Kapazität, die Temperatur, den elektrischen Widerstand und dergleichen. Wie in Figur 3 angedeutet, enthält die Diagnoseeinrichtung 12 daher eine Erfassungseinrichtung für die elektrische Spannung 19, eine Erfassungseinrichtung für die elektrische Kapazität 20, einen Temperatursensor zum Erfassen von Temperaturwerten 21, eine Erfassungseinrichtung für den elektrischen Widerstand 22 und eine Erfassungseinrichtung für die elektrische Stromstärke 23.

Die Diagnoseeinrichtung 12 enthält eine Schnittstelle 24, mit dessen Hilfe der Akkumulator 4a, 4b wiederlösbar mit der Diagnoseeinrichtung 12 verbunden werden kann. Die Schnittstelle 24 enthält dabei im Wesentlichen einen Pluskontakt, einen Minuskontakt und einen Kommunikationskontakt. Wenn der Akkumulator 4a, 4b mit der Diagnoseeinrichtung 12 in Kontakt treten soll, stehen der Kommunikationskontakt der Diagnoseeinrichtung 12 und der Kommunikationskontakt der Akku-Schnittstelle miteinander so in Verbindung, dass Daten und Informationen in Form von Signalen ausgetauscht werden können. Auf diese Weise werden bei einer Verbindung die Parameter des Akkumulators 4a, 4b an die Diagnoseeinrichtung 12 übertragen. In dem alternativen Ausführungsbeispiel können die Parameter des Akkumulators 4a, 4b auch drahtlos bzw. per Funk von dem Akkumulator 4a, 4b zu der Diagnoseeinrichtung 12 übertragen werden.

Die Ladeeinrichtung 13 dient zum Laden des Akkumulators 4a, 4b mit elektrischer Energie und steht mit der Diagnoseeinrichtung 12 in Verbindung, vgl. insbesondere Figur 3. Durch die Verbindung mit der Diagnoseeinrichtung 12 kann die Ladeeinrichtung 13 elektrische Energie über die Schnittstelle 24 zu dem Akkumulator 4a, 4b leiten. Ebenso kann auch von dem Akkumulator 4a, 4b elektrische Energie mit Hilfe der Ladeeinrichtung 13 entnommen.

Die Kühlungseinrichtung 14 dient zum Kühlen des Akkumulators 4a, 4b mit Hilfe einer Luftströmung F und ist in den vorliegenden Ausführungsbeispielen als Lüfter 14a mit einem Lüfterrad 14b ausgestaltet. In dem vorliegenden Ausführungsbeispiel ist jeweils ein Lüfter 14a neben einer Seitenwand der Kammer 11 positioniert, die Lüftungsöffnungen 17 aufweist. Wenn, wie in Figur 2 angedeutet, die als Lüfter 14a ausgestaltete Kühlungseinrichtung 14 eine Luftströmung F erzeugt, kann dieser durch die Lüftungsöffnungen 17 an einer ersten Seitenwand in die Kammer 11 einströmen über sowie an dem Akkumulator 4a, 4b entlangströmen und durch die Lüftungsöffnungen 17 an einer zweiten Seitenwand aus der Kammer 11 wieder hinausströmen.

Die Wärmeeinrichtung 15 dient zum Erwärmen des Akkumulators 4a, 4b. In dem vorliegenden Ausführungsbeispiel ist die Wärmeeinrichtung 15 in Form einer Heizspule ausgestaltet. Es ist möglich, dass die Wärmeeinrichtung 15 aus mehr als einer einzigen Heizspule besteht. Wie in den Figuren gezeigt, ist die als Heizspule ausgestaltete Wärmeeinrichtung 15 in dem Boden der Kammer 11 bzw. unterhalb eines in der Kammer 11 positionierten Akkumulators 4a, 4b angebracht. Alternativ oder zusätzlich kann eine als Heizspule ausgestaltete Wärmeeinrichtung 15 in dem Deckel und/oder an einer Seitenwand der Kammer 11 positioniert sein.

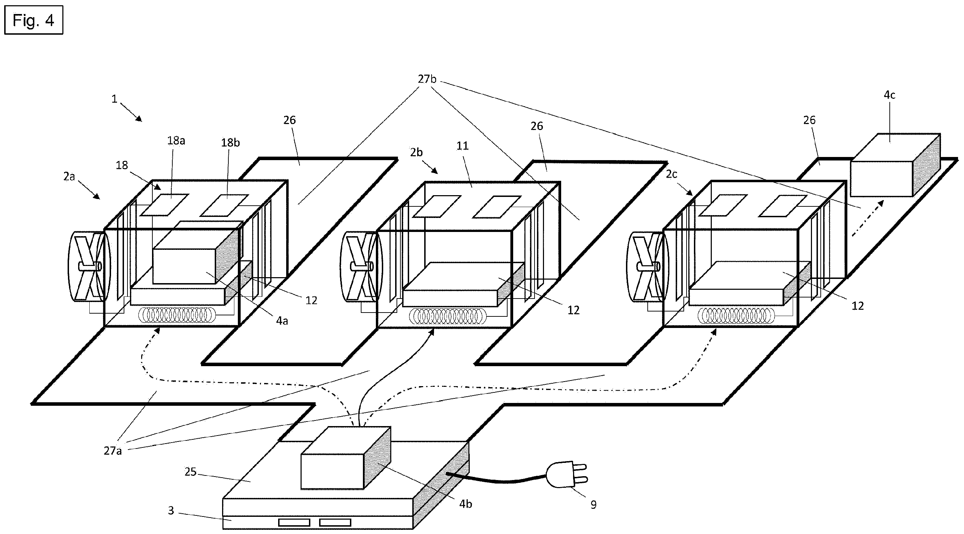

Figur 4 zeigt ein erfindungsgemäßes System 1 gemäß einem zweiten Ausführungsbeispiel mit einer ersten, zweiten und dritten Aufnahmevorrichtung 2a, 2b, 2c sowie eine Steuereinheit 3. Im Unterschied zu dem ersten Ausführungsbeispiel enthält das System 1 gemäß dem zweiten Ausführungsbeispiel eine dritte Aufnahmevorrichtung 2c, eine Annahmeeinrichtung 25, eine Lagereinrichtung 26, eine erste und zweite Transporteinrichtung 27a, 27b.

Die dritte Aufnahmevorrichtung 2c ist im Wesentlichen baugleich mit der ersten und/oder zweiten Aufnahmevorrichtung 2a, 2b in dem ersten Ausführungsbeispiel.

Die Annahmeeinrichtung 25 dient zum Empfangen bzw. Annehmen eines ersten, zweiten oder drittem Akkumulators 4a, 4b, 4c und ist gemäß dem zweiten Ausführungsbeispiel im Wesentlichen als Platte oder Plattform ausgestaltet. Die wesentliche Funktion der Annahmeeinrichtung 25 ist dabei eine sichere Ablagemöglichkeit für einen Akkumulator 4a, 4b, 4c zu schaffen, von dem aus der Akkumulator 4a, 4b, 4c weitergeführt werden kann. Die erste Transporteinrichtung 27a ist in dem zweiten Ausführungsbeispiel als Förderband ausgestaltet und so zwischen der Annahmeeinrichtung 25 und den Aufnahmevorrichtungen 2a, 2b, 2c angeordnet, dass ein Akkumulator 4a, 4b, 4c von der Annahmeeinrichtung 25 zu einer Aufnahmevorrichtung 2a, 2b, 2c transportiert werden kann.

Alternativ kann die erste Transporteinrichtung 27a auch als Rollenförderer mit einem Antrieb für die Rollen ausgestaltet sein.

Die Lagereinrichtung 26 dient, ähnlich wie die Annahmeeinrichtung 25, zum Empfangen bzw. Annehmen eines Akkumulators 4a, 4b, 4c und ist gemäß dem zweiten Ausführungsbeispiel im Wesentlichen als Platte oder Plattform ausgestaltet. Die wesentliche Funktion der Lagereinrichtung 26 ist dabei eine sichere Ablagemöglichkeit für einen Akkumulator 4a, 4b, 4c zu schaffen, von dem aus der Akkumulator 4a, 4b, 4c weitergeführt werden kann. Die zweite Transporteinrichtung 27b ist in dem zweiten Ausführungsbeispiel ebenfalls als Förderband ausgestaltet und so zwischen der Aufnahmevorrichtungen 2a, 2b, 2c und der Lagereinrichtung 26 angeordnet, dass ein Akkumulator 4a, 4b, 4c von einer Aufnahmevorrichtung 2a, 2b, 2c zu der Lagereinrichtung 26 transportiert werden kann.

Alternativ kann auch die zweite Transporteinrichtung 27b auch als Rollenförderer mit einem eigenen Antrieb für die Rollen ausgestaltet sein. Des Weiteren können die Rollen der zweiten Transporteinrichtung 27b auch durch den Antrieb der ersten Transporteinrichtung 27a angetrieben werden.

Zum Betreiben des erfindungsgemäßem Systems 1 gemäß dem ersten Ausführungsbeispiel wird ein Akkumulator 4a, 4b, 4c in die erste Aufnahmevorrichtung 2a positioniert. Der Akkumulator 4a, 4b, 4c wird mit Hilfe der Akku-Schnittstelle mit der Schnittstelle 24 der Diagnoseeinrichtung 12 verbunden. Durch die Verbindung des Akkumulators 4a, 4b, 4c mit der Diagnoseeinrichtung 12 können Daten und Informationen zwischen dem Akkumulator 4a, 4b, 4c und der Diagnoseeinrichtung 12 ausgetauscht werden. Der Akkumulator 4a, 4b, 4c überträgt dabei die Kapazitätswerte, den Spannungswert und den Temperaturwert an die Diagnoseeinrichtung 12. Der Akkumulator 4a, 4b, 4c enthält dabei einen Temperatursensor 21 und erfasst die Temperatur der Energiespeicherzellen 5a. Wenn die Diagnoseeinrichtung 12 anhand des erfassten und übermittelten Temperaturwerts ermittelt, dass dieser Temperaturwert unterhalb eines ersten vorbestimmten Schwellwert liegt, wird die Wärmeeinrichtung 15 zum Erwärmen des Akkumulators 4a, 4b, 4c aktiviert.

Alternativ oder zusätzlich hierzu kann die Steuerungseinrichtung 6 des Akkumulators 4a, 4b, 4c anhand des von dem Temperatursensor 21 des Akkumulators 4a, 4b, 4c erfassten Temperaturwertes ermitteln, dass dieser Temperaturwert unterhalb eines ersten vorbestimmten Schwellwert liegt. Die Steuerungseinrichtung 6 des Akkumulators 4a, 4b, 4c sendet ein entsprechendes Signal an die Steuereinheit 3 des Systems 1, damit die Wärmeeinrichtung 15 den Akkumulator 4a, 4b, 4c erwärmt.

Der erste Temperaturschwellwert ist spezifisch für den jeweiligen Akkumulator 4a, 4b, 4c festgelegt und in dem Speicher 10 der Steuereinheit 3 des Systems 1 hinterlegt. Der erste Temperaturschwellwert ist als Temperaturwert festgelegt, der für eine annähernd optimale Ladung des Akkumulators 4a, 4b, 4c mit elektrischer Energie zu niedrig ist. So ist beispielsweise möglich, dass der erste Temperaturschwellwert 5°C beträgt. Alternativ kann der erste Temperaturschwellwert auch höher oder niedriger als 5°C sein.

Wenn mit Hilfe der Wärmeeinrichtung 15 die Temperatur des Akkumulators 4a, 4b, 4c über dem ersten Temperaturschwellwert (d.h. höher als 5°C) liegt, wird dies von dem Temperatursensor 21 des Akkumulators 4a, 4b, 4c erfasst und ein entsprechendes Signal an die Steuereinheit 3 übermittelt. Nachdem nun der Akkumulator 4a, 4b, 4c eine Temperatur über dem ersten Temperaturschwellwert aufweist, die besser für einen Ladevorgang mit elektrischer Energie geeignet ist, kann mit Hilfe der Ladeeinrichtung 13 der tatsächliche Ladevorgang starten, sodass von der Steuereinheit 3 elektrische Energie zu dem Akkumulator 4a, 4b, 4c gelangen kann.

Die Erfassungseinrichtung 19 für die elektrische Spannung des Akkumulators 4a, 4b, 4c erfasst bzw. ermittelt den Spannungswert der Energiespeicherzellen 5a. Zum Laden der Energiespeicherzellen 5a mit elektrischer Energie wird ein entsprechendes Signal von der Steuerungseinrichtung 6 des Akkumulators 4a, 4b, 4c zu der Steuereinheit 3 des Systems 1 gesendet. Die Steuereinheit 3 des Systems 1 sendet nach Empfang des Signals elektrische Energie zu den Energiespeicherzellen 5a. Der gewünschte Spannungswert (d.h. Volt) für den Ladevorgang wird dabei von dem Akkumulator 4a, 4b, 4c durch das entsprechende Signal an die Steuereinheit 3 des Systems 1 übermittelt. Darüber hinaus wird mit Hilfe des ausgesendeten Signals von dem Akkumulator 4a, 4b, 4c an das System 1 auch ein geeigneter bzw. gewünschter Stromstärkewert (d.h. Amper) übermittelt und hierdurch von dem Akkumulator 4a, 4b, 4c für den Ladevorgang vorgegeben.

Während des Ladens erfasst die Erfassungseinrichtung 19 für die elektrische Spannung des Akkumulators 4a, 4b, 4c den aktuellen Spannungswert der Energiespeicherzellen 5a. Neben der Erfassungseinrichtung 19 für die elektrische Stromstärke erfasst auch die Erfassungseinrichtung für die elektrische Stromstärke 23 die Stromstärke (d.h. A bzw. Ah) der für den Ladevorgang übermittelten elektrischen Energie während des Ladevorgangs. Nach Erreichen eines vorbestimmten Spannungswert für die Energiespeicherzellen 5a, d.h. beispielsweise 70 oder 80% des maximalen Spannungswerts bzw. Kapazität des Akkumulators 4a, 4b, 4c, wird der Ladevorgang gestoppt.

Es ist während des Ladevorgangs möglich, dass die Kühlungseinrichtung 14 den Akkumulator 4a, 4b, 4c kühlt, um den Akkumulator 4a, 4b, 4c bzw. die Energiespeicherzellen 5a auf einen Temperaturwert zu kühlen, der unterhalb eines zweiten Temperaturschwellwert liegt. Der zweite Temperaturschwellwert beträgt gemäß dem Ausführungsbeispiel 60°C.

Alternativ kann der zweite Temperaturschwellwert auch höher oder niedriger als 60°C sein. Darüber hinaus ist es während des Ladevorgangs auch möglich, dass die Wärmeeinrichtung 15 den Akkumulator 4a, 4b, 4c erwärmt, um den Akkumulator 4a, 4b, 4c bzw. die Energiespeicherzellen 5a auf einen Temperaturwert zu erwärmen, der oberhalb eines ersten Temperaturschwellwert liegt.

Zum Betreiben des erfindungsgemäßem Systems 1 gemäß dem zweiten Ausführungsbeispiel wird ein Akkumulator 4a, 4b, 4c in die erste Aufnahmevorrichtung 2a positioniert.

Ein Akkumulator 4a, 4b, 4c wird auf die Annahmeeinrichtung 25 positioniert. Die Steuereinheit 3 des Systems 1 ermittelt welche Aufnahmevorrichtung 2a, 2b, 2c verfügbar ist, d.h. in welcher Aufnahmevorrichtung 2a, 2b, 2c sich zurzeit kein Akkumulator 4a, 4b, 4c befindet. Wenn der Akkumulator 4a, 4b, 4c in die zweite Aufnahmevorrichtung 2b transportiert werden soll, befördert die erste Transporteinrichtung 27a den Akkumulator 4a, 4b, 4c von der Annahmeeinrichtung 25 zu der zweiten Aufnahmevorrichtung 2b. Wenn der Akkumulator 4a, 4b, 4c in der zweiten Aufnahmevorrichtung 2b angelangt ist, verbindet sich die Akku-Schnittstelle mit der Schnittstelle 24 der Diagnoseeinrichtung 12. Nach dem Übermitteln der entsprechenden Daten und Information in Form von Signalen von der Steuerungseinrichtung 6 des Akkumulators 4a, 4b, 4c an die Steuereinheit 3 des Systems 1 wird der von dem Akkumulator 4a, 4b, 4c geregelte Ladevorgang durchgeführt. Die ebenfalls von der Steuerungseinrichtung 6 des Akkumulators 4a, 4b, 4c gesteuerten bzw. geregelten Kühlungseinrichtung 14 und Wärmeeinrichtung 15 werden bei Erreichen der entsprechenden Temperaturschwellwerte aktiviert.

Nach Beendigung des Ladevorgangs wird der Akkumulator 4a, 4b, 4c mittels der zweiten Transporteinrichtung von der zweiten Aufnahmevorrichtung 2b zu der Lagereinrichtung 26 transportiert. Von der Lagereinrichtung 26 kann der mit elektrischer Energie geladene Akkumulator 4a, 4b, 4c von einem Anwender entnommen werden.

### Bezugszeichenliste:

- 1: System
- 2a: erste Aufnahmevorrichtung
- 2b: zweite Aufnahmevorrichtung
- 2c: dritte Aufnahmevorrichtung
- 3: Steuereinheit
- 4a: erster Akkumulator
- 4b: zweiter Akkumulator
- 4c: dritter Akkumulator
- 5: Akku-Gehäuse
- 5a: Energiespeicherzelle
- 6: Steuerungseinrichtung
- 7: Temperatursensor
- 8: Ein- und Ausgabeeinrichtung
- 9: Netzanschluss
- 10: Speicher
- 11: Kammer
- 12: Diagnoseeinrichtung
- 13: Ladeeinrichtung
- 14: Kühlungseinrichtung
- 14a: Lüfter
- 14b: Lüfterrad
- 15: Wärmeeinrichtung
- 16: Öffnung
- 16a: Tür
- 16b: Scharnier
- 17: Lüftungsöffnung
- 18: Anzeigeeinrichtung
- 18a: erste LED-Leuchte
- 18b: zweite LED-Leuchte
- 19: Erfassungseinrichtung für die elektrische Spannung
- 20: Erfassungseinrichtung für die elektrische Kapazität
- 21: Temperatursensor zum Erfassen von Temperaturwerten
- 22: Erfassungseinrichtung für den elektrischen Widerstand
- 23: Erfassungseinrichtung für die elektrische Stromstärke
- 24: Schnittstelle
- 25: Annahmeeinrichtung
- 26: Lagereinrichtung
- 27a: erste Transporteinrichtung
- 27b: zweite Transporteinrichtung

- F: Luftströmung
- R: Rahmen

## Patentansprüche

1. System (1) mit wenigstens einer ersten Aufnahmevorrichtung (2a, 2b, 2c) zum Aufnehmen wenigstens eines ersten Akkumulators (4a, 4b, 4c), wobei der wenigstens erste Akkumulator (4a, 4b, 4c) einen Temperatursensor (7) zum Erfassen mindestens eines Temperaturwertes des Akkumulators (4a, 4b, 4c) enthält,
**dadurch gekennzeichnet, dass** die wenigstens erste Aufnahmevorrichtung (2a, 2b, 2c) eine Ladeeinrichtung (13) zum Laden des Akkumulators (4a, 4b, 4c) mit elektrischer Energie, eine Kühlungseinrichtung (14) zum Kühlen des Akkumulators (4a, 4b, 4c) sowie eine Wärmeeinrichtung (15) zum Erwärmen des Akkumulators (4a, 4b, 4c) enthält.

2. System (1) nach Anspruch 1,
**dadurch gekennzeichnet, dass** eine Diagnoseeinrichtung (12) zum Ermitteln wenigstens eines Parameters des Akkumulators (4a, 4b, 4c) enthalten ist.

3. System (1) nach Anspruch 1 oder 2,
**dadurch gekennzeichnet, dass** an der wenigstens ersten Aufnahmevorrichtung (2a, 2b, 2c) mindestens eine Anzeigeeinrichtung (18) zum Ausgeben wenigstens eines Freigabesignals oder eines Sperrsignals enthalten ist.

4. System (1) nach wenigstens einem der Ansprüche 1 bis 3,
**dadurch gekennzeichnet, dass** die Aufnahmevorrichtung (2a, 2b, 2c) als Kammer (11) ausgestaltet ist, wobei die Kammer (11) mindestens ein Volumen zum Aufnehmen wenigstens eines Akkumulators (4a, 4b, 4c) und wenigstens eine wiederverschließbare Öffnung zum Platzieren des wenigstens einen Akkumulators (4a, 4b, 4c) im Inneren der Kammer (11) aufweist.

5. System (1) nach wenigstens einem der Ansprüche 1 bis 4,
**dadurch gekennzeichnet, dass** wenigstens eine zweite Aufnahmevorrichtung (2a, 2b, 2c) zur Aufnehmen wenigstens eines zweiten Akkumulators (4a, 4b, 4c) enthalten ist.

6. System (1) nach wenigstens einem der Ansprüche 1 bis 5,
**dadurch gekennzeichnet, dass** eine Annahmeeinrichtung (25) sowie eine erste Transporteinrichtung (27a) enthalten ist, wobei die Annahmeeinrichtung (25) zum Empfangen wenigstens eines Akkumulators (4a, 4b, 4c) und die erste Transporteinrichtung (27a) zum Transport des wenigstens einen Akkumulators (4a, 4b, 4c) zu einer Aufnahmevorrichtung (2a, 2b, 2c) ausgestaltet ist.

7. System (1) nach wenigstens einem der Ansprüche 1 bis 6,
**dadurch gekennzeichnet, dass** eine Lagereinrichtung (26) sowie eine zweite Transporteinrichtung (27b) enthalten ist, wobei die Lagereinrichtung (26) zum wenigstens zeitweiligen Lagern wenigstens eines Akkumulators (4a, 4b, 4c) und die zweite Transporteinrichtung (27b) zum Transport des wenigstens einen Akkumulators (4a, 4b, 4c) von einer Aufnahmevorrichtung (2a, 2b, 2c) zu der Lagereinrichtung (26) ausgestaltet ist.
